# EUROPEAN PATENT APPLICATION

(11) **EP 4 450 853 A1**
(43) Date of publication of application: **23.10.2024**
(21) Application number: 23382378.0
(22) Date of filing: 21.04.2023
(51) Int. Cl.: F16K 11/085, B60K 11/02, F16K 11/20, F16K 27/06

(54) **VALVE ASSEMBLY, INTEGRATED THERMAL MANAGEMENT MODULE AND ELECTRIC MOTOR VEHICLE**

(71) Applicant: Cikautxo, S. Coop., 48710 Berriatua (Vizcaya) (ES)
(72) Inventor: ALBERDI BASCARAN, Aitor, 20600 EIBAR (ES); RODRIGUEZ IZAGUIRRE, Aymar, 48309 ERRIGOITI (ES); VARGAS ACEVEDO, Unai, 48340 AMOREBIETA (ES)
(74) Representative: Igartua, Ismael

(57) **Abstract**

Valve assembly comprising a first valve (1) and a second valve (2), each valve (1, 2) comprising an inner cavity, a movable valve body (3) arranged inside the inner cavity, and a plurality of conduits (5) in fluidic communication with the respective inner cavity. When rotating the respective valve body (3), at least two of the conduits (5) of the respective valve (1, 2) are fluidically connected. The valve assembly of the invention also comprises a connecting conduit (5a) which fluidically connects the inner cavity of both valves (1, 2), so that the valve bodies (3) can be arranged in such a way that at least one conduit (5) of the first valve (1) is fluidically connected with at least one conduit (5) of the second valve (2). The valve assembly is integrated in a thermal management module comprising a first actuator configured to move the valve body (3) of the first valve (1), and a second actuator configured to move the valve body (3) of the second valve (2), so that each valve body (3) can rotate independently. The thermal management module is assembled in an electric motor vehicle according to the invention.

## Description

### TECHNICAL FIELD

The present invention relates to valves and thermal management modules for electric motor vehicles.

### PRIOR ART

Historically, electric batteries have had high manufacturing costs, weight, long recharge times with short service life and autonomy, which has limited the mass adoption of battery-powered electric vehicles. However, as a result of current technological advantages in batteries and environmental regulations, more and more manufacturers are venturing into electric vehicles instead of conventional combustion vehicles. Therefore, the automotive sector is in a transition phase where the trend is to gradually reduce the production of combustion vehicles and increase the production of electric vehicles.

Electric vehicles are vehicles that are powered by one or more electric motors, which are powered by electric batteries. These batteries, in order to be efficient, must work within an optimal operating temperature range, so that in some cases it will be necessary to heat the batteries and in others to cool the batteries. Therefore, the thermal management of an electric vehicle is more complex compared to the thermal management of a conventional combustion vehicle, since apart from thermally managing the passenger compartment and the vehicle engine, the batteries must also be thermally managed.

The space in vehicles to accommodate the necessary elements for good thermal management of the vehicle is limited, being more and more common using integrated modules to facilitate this task. Said modules often include valves that fluidically connect different conduits, each conduit being associated with a vehicle component or element.

In this regard, US20150027572A1 describes a six-port valve comprising a main body with an inner cavity, the conduits of the valve being in fluidic communication with the inner cavity. The inner cavity is divided by an insulating wall which divides the inner cavity into two sections. In each section there is a movable valve body that can rotate, so that both valve bodies share an axial shaft that cooperates with an actuator to rotate both valve bodies. Rotating the valve bodies fluidically connects at least two of the six conduits of the valve.

### DISCLOSURE OF THE INVENTION

An object of the invention is to provide a valve assembly, as defined in the claims.

Another object of the invention is to provide an integrated thermal management module for motor vehicles, as defined in the claims.

The valve assembly of the invention comprises a first valve and a second valve, each valve comprising an inner cavity, a movable valve body arranged inside the inner cavity so that it can rotate, and a plurality of conduits in fluidic communication with the corresponding inner cavity. When rotating the corresponding valve body at least two conduits of the valve assembly are connected fluidically. The valve assembly of the invention also comprises a connecting conduit that fluidically communicates the inner cavity of the first valve and the inner cavity of the second valve, so that the valve bodies of each valve can be arranged in such a way that at least one conduit of the first valve is fluidically connected to at least one conduit of the second valve.

The integrated thermal management module for motor vehicles of the invention comprises the described valve assembly, a first actuator configured to move the valve body of the first valve, and a second actuator configured to move the valve body of the second valve, so that each valve body can rotate independently.

Another object of the invention is to provide an electric motor vehicle comprising, elements to be conditioned, conditioning means and the integrated thermal management module of the invention, such that said module is configured to interact with any conditioner of the conditioning means to cool and/or heat any of the elements to be conditioned.

With the valve assembly of the invention, a higher thermal efficiency of the vehicle where the valve assembly is mounted is achieved in a simple and economical way. The valves of the valve assembly can work independently or jointly through the connection conduit, thus increasing the number of active conduits of the valve assembly in a simple way, which allows to increase the number of possible combinations to connect the different conduits of the valve assembly, that is to say, it allows to design a great variety of operating modes of the valve assembly, without complicating the design of the valve bodies to achieve this purpose, obtaining, due to the invention, a compact, reliable and economical valve assembly. Thus, it is possible to manage the elements to be conditioned of the vehicle of the invention through the module of the invention in an independent manner, that is to say, without them being fluidly communicated with each other, or in a dependent manner, that is to say, in such a way that at least two of the elements to be conditioned are fluidly communicated with each other, so that it is possible to take advantage of the residual heat of one of the elements to be conditioned to thermally conditioning another element of the elements to be conditioned, i.e. to adjust the temperature of this element, thus improving the energy efficiency of the vehicle.

Also, as the valve assembly is integrated into a module, it facilitates its assembly in the vehicle, achieving a significant saving of space and parts in the vehicle, as the route of the hoses or tubes of the vehicle's hydraulic circuits is optimised.

These and other advantages and features of the invention will become apparent in view of the figures and the detailed description of the invention.

### DESCRIPTION OF THE DRAWINGS

Figure 1 shows a perspective view of a first embodiment of the integrated thermal management module comprising a first embodiment of the valve assembly of the invention.
Figure 2A shows a sectional perspective view of the module of Figure 1.
Figure 2B shows a detail of Figure 2A.
Figure 3 shows a perspective view of a first embodiment of the valve assembly according to the invention, which is integrated in the module of figure 1, the first valve and the second valve being without the corresponding closing cap.
Figure 4 shows another perspective view of the valve assembly of Figure 3 but without the valve bodies.
Figure 5 shows a perspective view of a second embodiment of the module of the invention comprising a second embodiment of the valve assembly of the invention.
Figure 6 shows a sectional view of the valve assembly of the module of Figure 5.
Figure 7 shows a schematic representation of the elements to be conditioned, the conditioning means and the integrated thermal management module of the electric motor vehicle of the invention.
Figures 7A to 7F show different hydraulic circuits representing different operation modes of the integrated thermal management module of the invention.

### DETAILED DISCLOSURE OF THE INVENTION

With electric vehicles, the thermal management of vehicles has become more complicated, because it is not sufficient to have a cooling circuit that cools the combustion engine or the passenger compartment of the vehicle, and/or a heating system that heats the passenger compartment of the vehicle, for example. With the electric vehicle, it is also necessary to cool or to heat the batteries of the electric vehicle.

The integrated module of the invention, which incorporates the valve assembly of the invention, allows the thermal efficiency of the vehicle to be improved, as will be detailed throughout the description.

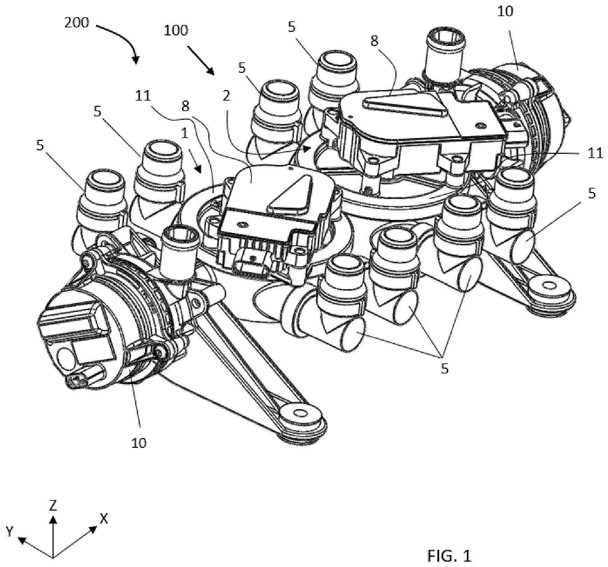

Figure 1 shows a perspective view of a first embodiment of the integrated module 200 of the invention comprising a first embodiment of the valve assembly 100 according to a first embodiment of the invention.

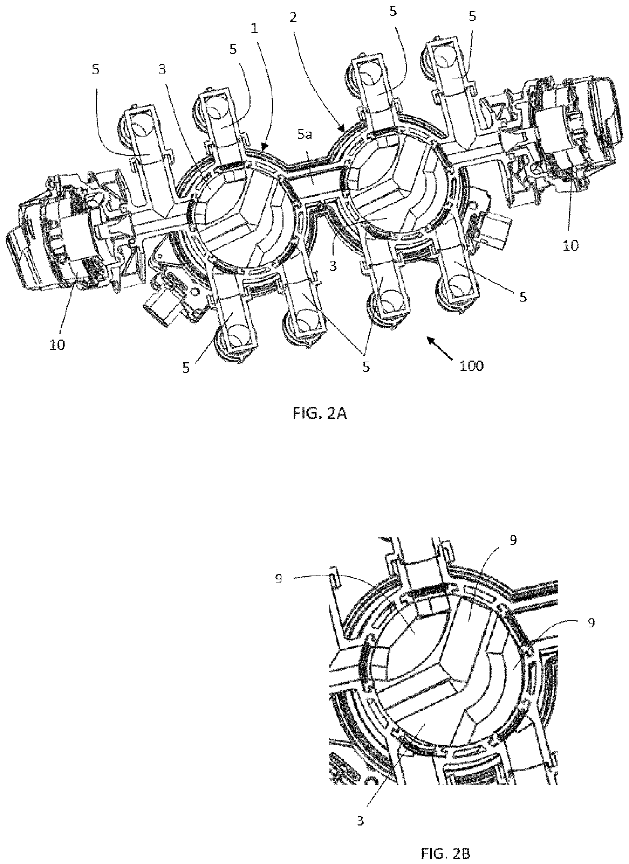

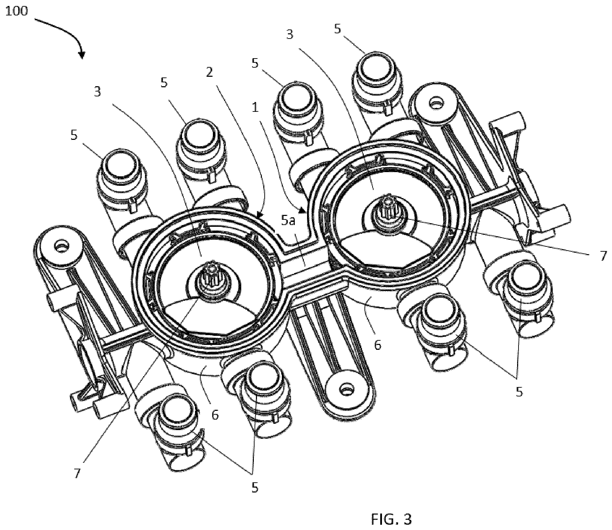

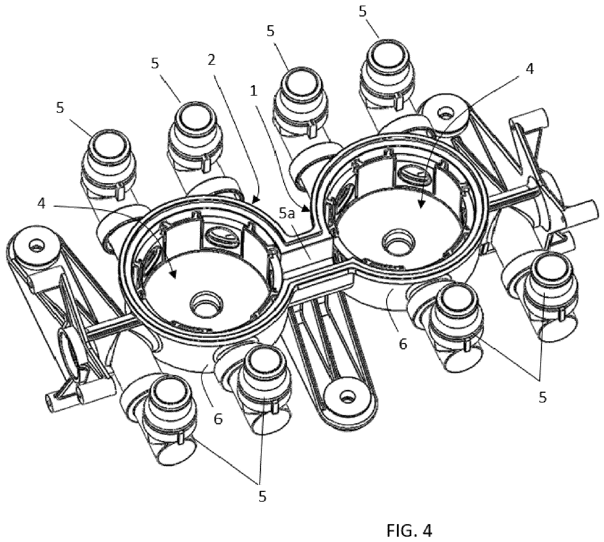

The valve assembly of the invention comprises a first valve 1 and a second valve 2, as shown in the non-limiting example of Figure 1. Each valve 1 and 2 comprises an inner cavity 4, shown in Figure 4, a movable valve body 3 arranged inside said inner cavity 4 so that it can rotate, as can be seen in the non-limiting example of Figure 3, and a plurality of conduits 5 in fluidic communication with the corresponding inner cavity 4, as can be seen for example in Figure 2A. When a corresponding valve body 3 is rotated, at least two of the conduits 5 of the valve assembly are fluidically connected. The valve assembly of the invention also comprises a connecting conduit 5a which fluidically communicates the inner cavity 4 of the first valve 1 and the inner cavity 4 of the second valve 2, so that the valve bodies 3 of each valve 1 and 2 can be arranged in such a way that at least one conduit 5 of the first valve 1 is fluidically connected with at least one conduit 5 of the second valve 2, allowing the fluid of a corresponding hydraulic circuit of the vehicle's thermal system to be directed from the conduit 5 of the first valve 1 to the conduit 5 of the second valve 2, or vice versa.

With the valve assembly of the invention it is possible to improve the thermal efficiency of the vehicle in which the valve assembly is mounted in a simple and economical manner. The valves 1 and 2 of the valve assembly 100 can work independently or jointly through the connecting conduit 5a, thus allowing to increase the number of active conduits 5 of the valve assembly 100, i.e. conduits carrying a fluid, in a simple manner, and also allowing to increase the number of possible combinations for connecting the conduits 5 of the valve assembly 100 to each other, what makes it possible to design a wide variety of operating modes of the valve assembly 100, as will be detailed further below, without complicating the design of the valve bodies 3 for this purpose, thus obtaining, thanks to the invention, a reliable and economical compact valve assembly 100.

Figure 3 shows a first embodiment of the valve assembly 100 and Figure 4 shows said valve assembly 100 but without the valve bodies 3 to better appreciate the inner cavity 4 of each valve 1 and 2. The valve assembly 100 comprises a main body 6, said main body 6 comprising the two inner cavities 4 such that both inner cavities 4 are fluidically communicated through the connecting conduit 5a, as shown in Figure 4. Each valve body 3 is arranged in a respective inner cavity 4, as shown in figure 3. In order to make the inner cavity 4 of each valve 1 and 2 watertight, each valve 1 and 2 comprises a closing cap 11 which is fitted after the corresponding valve body 3 has been assembled. For a better understanding of the invention, in Figure 3 the closing caps 11 are not shown.

In the non-limiting example of the valve assembly 100 shown in Figure 3, the inner cavities 4 of the two valves 1 and 2 are arranged on the same level, i.e., one next to the other according to a longitudinal direction X shown in the drawings, which corresponds to a horizontal aligned arrangement. In this embodiment, the connecting conduit 5a is arranged between the two inner cavities 4, preferably also in the longitudinal direction X.

In the non-limiting example of the valve assembly 100 shown in Figure 3, the closing caps 11 of each inner cavity 4 are joined together forming a single part, thus ensuring a tight seal, not only of each inner cavity 4 but also of the connecting conduit 5a.

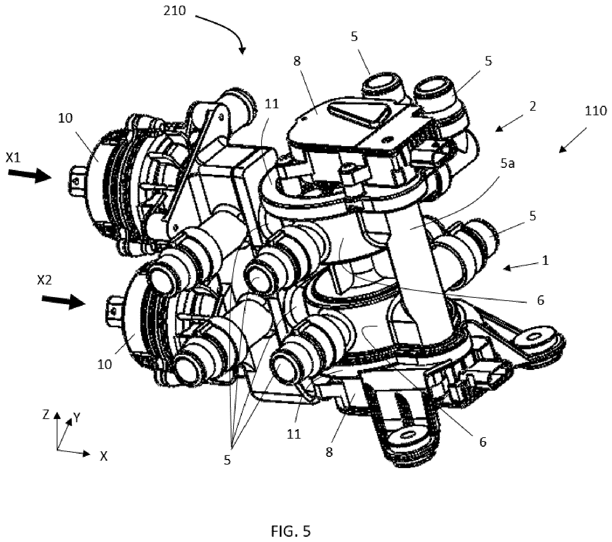

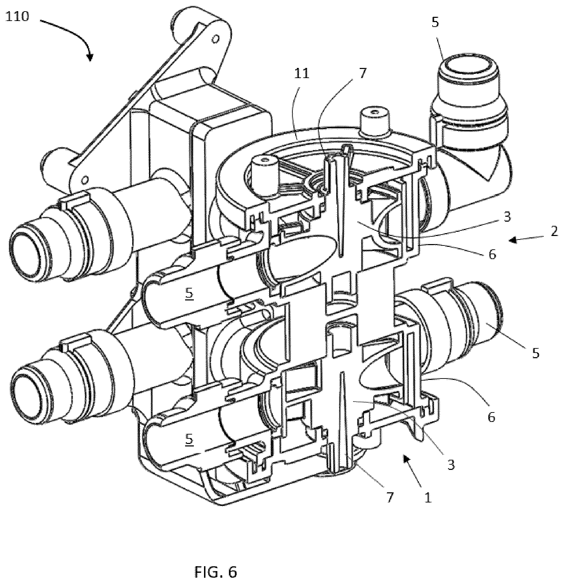

In another embodiment of the valve assembly 110 of the invention shown in Figures 5 and 6, the inner cavities 4 of the two valves 1 and 2 are arranged on different levels, i.e., one above the other according to an axial direction Z shown in the drawings, which corresponds to a vertical arrangement, i.e., perpendicular to the longitudinal direction X. In this embodiment, the connecting conduit 5a is preferably arranged on one side of the main body 6 of the valve assembly 110, in the axial direction Z, but could also be arranged, for example, in said axial direction Z but between the two corresponding inner cavities 4.

Each valve 1 and 2 of the invention also comprises a shaft 7 cooperating with the corresponding valve body 3, each shaft 7 being configured to couple to a respective actuator 8, so that the corresponding valve body 3 can rotate. The two shafts 7 of the invention are not coupled to each other, so that each valve body 3 can rotate independently of each other. Preferably, each valve body 3 and the respective shaft 7 form a single part, said shaft 7 protruding axially from the valve body 3 in the Z direction, in any of the described embodiments.

The integrated thermal management module 200 of figure 1 comprising the valve assembly 100 of figure 3, also comprises a first actuator 8 configured to move the valve body 3 of the first valve 1 and a second actuator 8 configured to move the valve body 3 of the second valve 2. The shaft 7 of each valve 1 and 2 is coupled to a respective actuator 8, as shown in Figure 1 or Figure 5, so that thanks to each actuator 8, the valve bodies 3 of each valve 1 and 2 can rotate independently of each other.

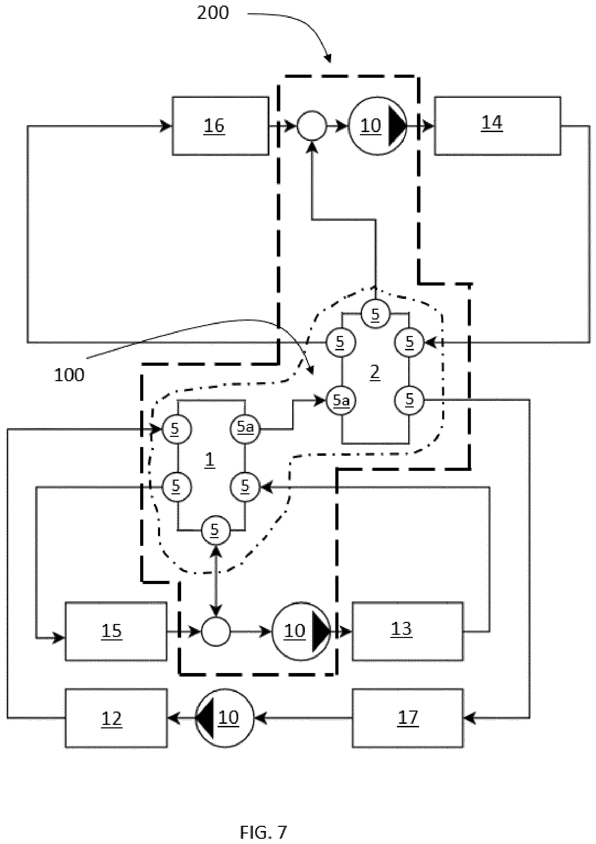

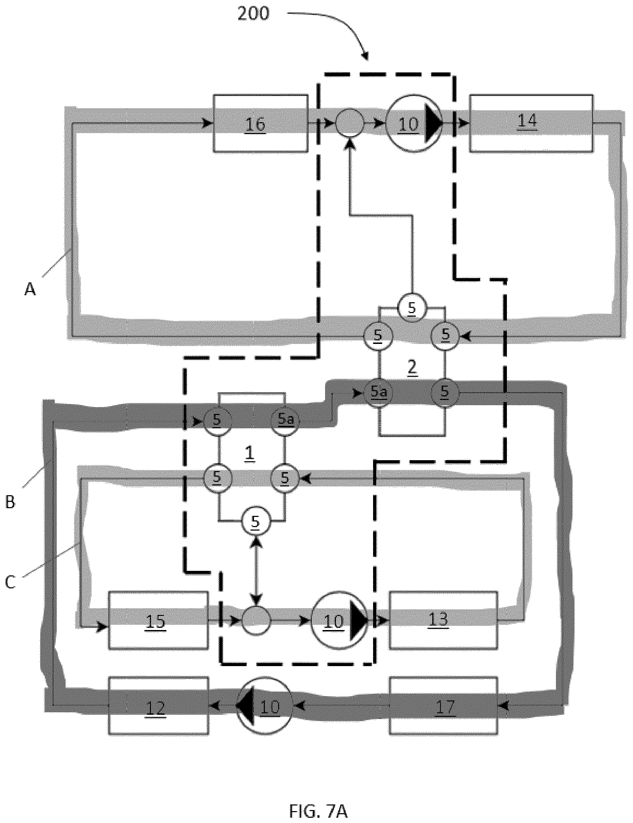

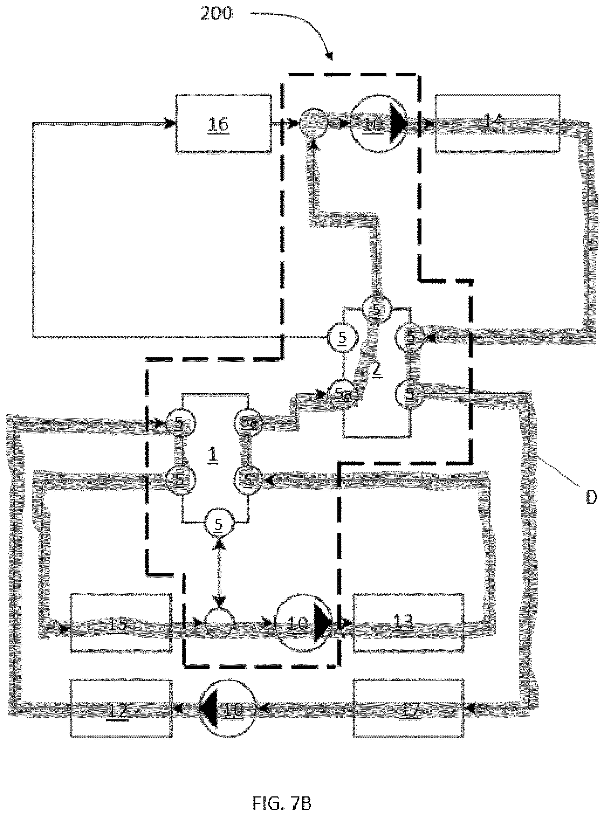

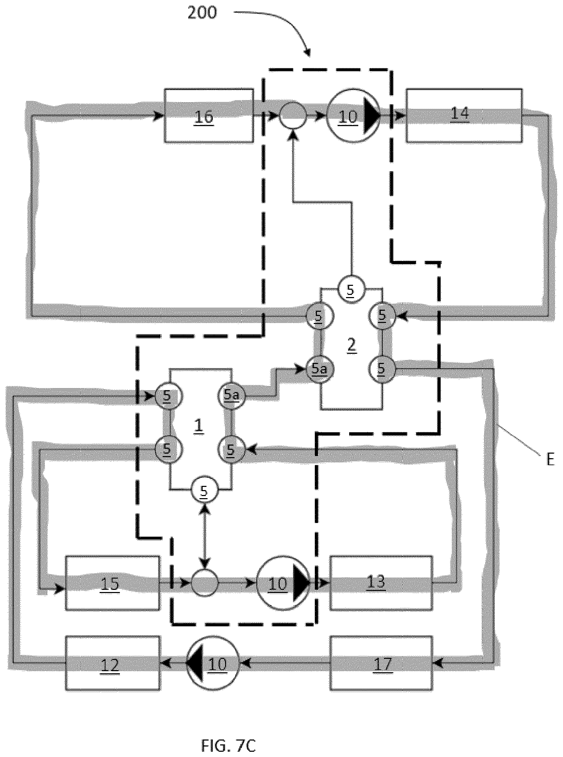

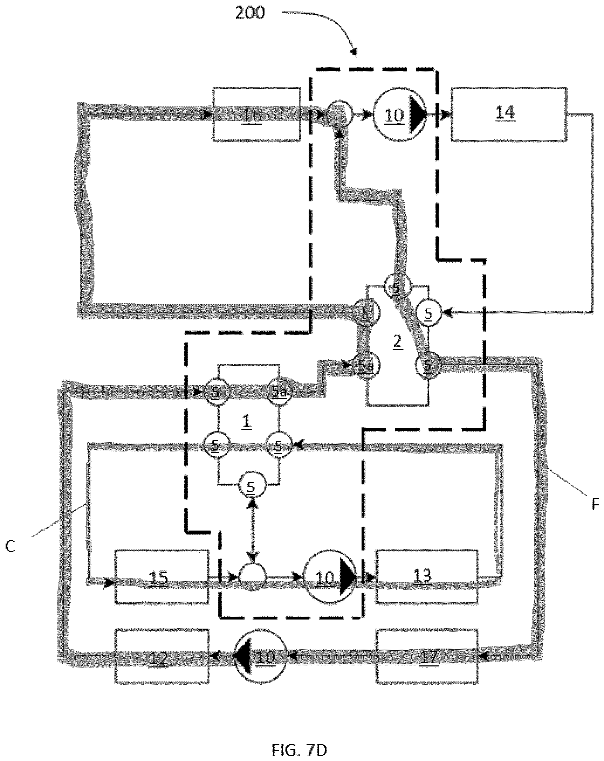

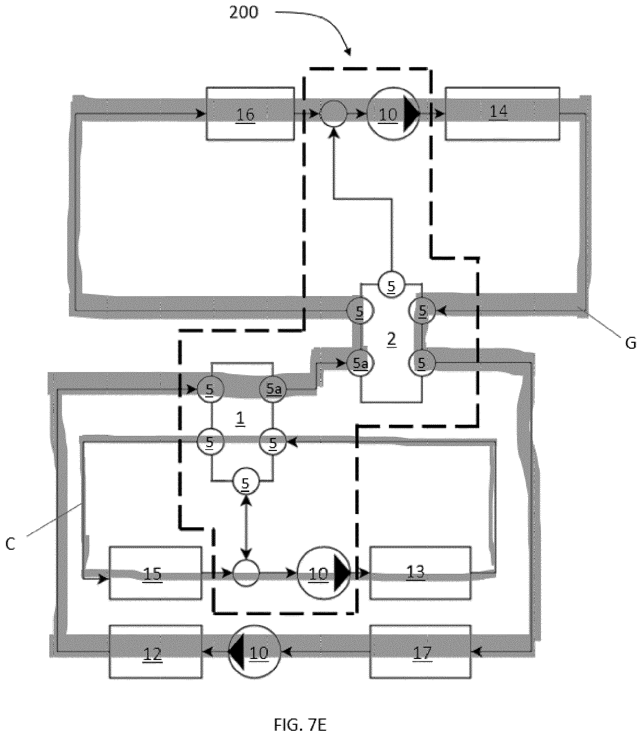

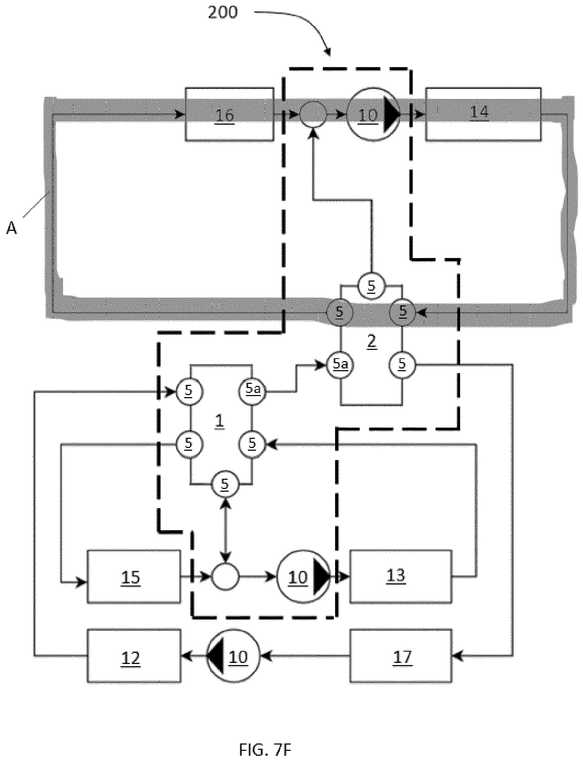

The module 200 also comprises a first hydraulic pump 10 which is in fluidic communication with at least one conduit 5 communicated with the inner cavity 4 of the first valve 1, and a second hydraulic pump 10 which is in fluidic communication with at least one conduit 5 communicated with the inner cavity 4 of the second valve 2, as shown in the diagram of Figure 7.

In the non-limiting example of module 200 of Figure 1, the hydraulic pumps 10 and the respective valves 1 and 2 of the valve assembly 100 of Figure 3 are arranged next to each other in the longitudinal direction X, each pump 10 being arranged at one end of the valve assembly 100, following the horizontal arrangement.

In the embodiment of the integrated thermal management module 210 of Figure 5, comprising the valve assembly 110 of Figure 6 and also comprising a respective actuator 8 configured to move the valve body 3 of the corresponding valve 1 or 2, so that each valve body 3 can rotate independently of each other, it also comprises a respective hydraulic pump 10 in fluidic communication with at least one conduit 5 communicated with the inner cavity 4 of the corresponding valve 1 or 2. However, in this case, the first hydraulic pump 10 and the first valve 1 are arranged according to a first longitudinal direction X1 at a first level, and the second hydraulic pump 10 and the second valve 2 are arranged according to a second longitudinal direction X2 parallel to the first longitudinal direction X1, so that the respective valves 1 and 2 are arranged according to the axial direction Z, perpendicular to the longitudinal direction X, in accordance with the vertical arrangement of the valve assembly 110 of Figure 6.

In any of the embodiments of the valve assembly 100 and 110 described above, the inner cavity 4 of each valve 1 and 2 is in fluidic communication with four conduits 5 and with the connecting conduit 5a, the respective valve body 3 being configured to selectively communicate at least two of said conduits 5 during use, so that the valve assembly 100 or 110 can operate as two independent four-way valves, or as an eight-way valve, thus increasing the number of possible combinations for communicating the conduits 5 of the valve assembly 100 or 110 with each other, allowing a wide variety of operating modes of the valve assembly 100 or 110 to be designed, which is very advantageous in an electric vehicle.

As shown in the non-limiting example of Figure 2B, the valve body 3 of each valve 1 and 2 of the valve assembly of the invention 100 and 110, according to any of the described embodiments, comprises three passage channels 9, said passage channels 9 being configured to allow the passage of a fluid between two conduits 5 of a respective valve 1 or 2, and/or between a conduit 5 of the respective valve 1 or 2 and the connecting conduit 5a.

Thus, the valve assembly of the invention 100 and 110, according to any of the embodiments described, comprises a main operating mode wherein the valve bodies 3 of the valves 1 and 2 are arranged such that a first conduit 5 of the first valve 1 is fluidically connected to a first conduit 5 of the second valve 2, a second conduit 5 of the first valve 1 can be fluidically connected to a third conduit 5 of the first valve 1, and a second conduit 5 of the second valve 2 can be fluidically connected to a third conduit 5 of the second valve 2, whereby the valve assembly 100 or 110 can simultaneously manage up to three independent hydraulic circuits. The main operating mode may in turn comprise a plurality of operating modes, as will be detailed further below in relation to the non-limiting examples of Figures 7A to 7E.

Likewise, the valve assembly of the invention 100 and 110, according to any of the embodiments described, also comprises a secondary operating mode in which the valve bodies 3 of the valves 1 and 2 are arranged in such a way that at least two conduits 5 of the first valve 1 are fluidically connected to each other, and/or at least two conduits 5 of the second valve 2 can be fluidically connected to each other, thus being able to manage simultaneously up to two independent hydraulic circuits for each valve 1 or 2. The secondary operating mode may in turn comprise a plurality of operating modes, as will be detailed further below in relation to the non-limiting example of Figure 7F.

The electric motor vehicle of the invention comprises elements to be conditioned comprising a first element, preferably a battery pack 12, a second element, preferably at least one electric motor 13 (preferably with its corresponding power electronics, such as for example a power inverter), said at least one electric motor 13 being powered by the battery pack 12, and a third element, preferably a passenger compartment 14 where the passengers of the vehicle are accommodated, preferably seated, although the passengers could also stand in the passenger compartment 14, for example if the vehicle is a bus. The vehicle also comprises at least three hydraulic pumps 10, the battery pack 12, the electric motor 13 and the passenger compartment 14 being able to be associated with a respective hydraulic pump 10 which facilitates the circulation of a coolant, for example glycol, as shown for example in the example of Figure 7A, or at least two of the elements to be conditioned 12, 13 or 14 being able to be associated with the same hydraulic pump 10. Two of said hydraulic pumps 10 and the valve assembly 100 or 110 of the invention form the thermal management module 200 or 210 of the invention, which is integrated in the electric motor vehicle, said module 200 or 210 forming a single part.

In some cases it will be necessary to heat the battery pack 12, and in other cases it will be necessary to cool the battery pack 12, so that the battery pack 12 can operate in an optimal operating temperature range. In some cases, it will also be necessary to heat the passenger compartment 14, and in other cases to cool the electric motor 13.

The vehicle of the invention also comprises conditioning means for thermally conditioning the elements to be conditioned 12, 13 and 14, i.e., for heating or cooling them. The conditioning means comprise a first conditioner, preferably a radiator 15, a second conditioner, preferably a heater 16, and a third conditioner, preferably a cooler 17, the module 200 or 210 being configured to interact with the radiator 15, the heater 16 and/or the cooler 17 to cool or heat the battery pack 12, the electric motor 13 and/or the passenger compartment 14.

Each conduit 5 of the valve assembly 100 or 110 is associated with a respective conditioning element 12, 13 or 14, with a respective conditioner 15, 16 or 17, or with a respective hydraulic pump 10, as shown in Figure 7.

Figure 7 shows a schematic representation of the elements to be conditioned 12, 13 and 14, the conditioning means 15, 16 and 17, the hydraulic pumps 10 and the integrated thermal management module 200 of the electric motor vehicle of the invention. As can be seen in said figure, two of the pumps 10 are integrated in the module 200 of the invention, the pumps 10 being in fluidic communication with a conduit 5 communicated with the inner cavity 4 of a respective valve 1 or 2.

As already discussed, the module 200 or 210 of the invention, comprising the valve assembly 100 or 110 of the invention, can simultaneously manage up to three hydraulic circuits for thermally managing the battery pack 12, the electric motor 13 and the passenger compartment 14 via the radiator 15, the heater 16 and/or the cooler 17, as shown in the example of Figure 7A.

However, thanks to the valve assembly 100 or 110 of the invention, it is possible to create fewer but more complex hydraulic circuits, more complex being understood as meaning that it is possible to fluidically communicate at least two of the elements to be conditioned in order to take advantage of the heat released by at least one of said elements through the same hydraulic circuit, without the need to design a complex valve and/or valve body 3 which is difficult to manufacture, thus improving the thermal efficiency of the vehicle, being possible to design a plurality of operating modes of the valve assembly 100 or 110 within the main and/or secondary operation, depending on the need in each case.

Thus, with the module 200 or 210 of the invention it is possible on the one hand to thermally conditioning an element to be conditioned 12, 13 or 14 by a respective conditioner 15, 16 or 17 via a respective hydraulic circuit which is managed by the valve assembly 100 or 110 of the invention, as can be seen for example in the examples of Figures 7A, 7D or 7F and which will be detailed below, wherein the elements to be conditioned 12, 13 and 14 are not in fluidic communication with each other, it being possible to manage all the hydraulic circuits simultaneously in an independent manner. However, on the other hand, it is also possible to thermally conditioning each element to be conditioned 12, 13, or 14 by any of the conditioners 15, 16 or 17 of the conditioning means and/or by a combination thereof, or even by another of the elements to be conditioned 12 or 13, as can be seen for example in the examples of Figures 7B, 7C or 7E and which will be detailed below. In this case, at least two of the elements to be conditioned 12, 13 or 14 are fluidly communicated with each other through a respective hydraulic circuit which is also managed by the valve assembly 100 or 110 of the invention, thus being able to improve the energy efficiency of the vehicle.

In the example of Figure 7A, where one of the main operating modes is shown, the battery pack 12 is cooled with the cooler 17, which in this case remains active, following a first hydraulic circuit B, the electric motor 13 is cooled with the radiator 15 following a second hydraulic circuit C, and the passenger compartment 14 is heated with the heater 16 following a third hydraulic circuit A, said three circuits A, B and C being independent of each other. However, in the example of Figure 7B, where another of the main operating modes is shown, the battery pack 12 is cooled with the cooler 17, which in this case also remains active, the electric motor 13 is cooled with the radiator 15 and the cooler 17, and the passenger compartment 14 is heated with the residual heat from the electric motor 13, following a single hydraulic circuit D (highlighted in Figure 7B). In this case, the hydraulic circuit D is more complex, in the sense that all the elements to be conditioned, i.e. the battery pack 12, the electric motor 13 and the passenger compartment 14, are in fluidic communication with each other so that it is possible to take advantage of the residual heat of the at least one of these elements (the electric motor 13 in this example) to condition, i.e. to adjust the temperature of at least another of these elements (the passenger compartment 14 in this example), thus improving the energy efficiency of the vehicle.

Figure 7C shows another of the main operating modes, which is a variant of the hydraulic circuit shown in Figure 7B, represented with circuit E, which could be used in case the residual heat from the electric motor 13 is not sufficient to heat the passenger compartment 14. Therefore, in the example of Figure 7C the battery pack 12 is cooled with the cooler 17, which remains active, and the electric motor 13 is cooled with the radiator 15 and the cooler 17, while the passenger compartment 14 is heated, on the one hand, with the residual heat released by the batteries 12 and the electric motor 13 and, on the other hand, with the heater 16. In this case, because of the residual heat used, the power of the heater 16 required to adjust the temperature of the passenger compartment 14 can be lower. In this example, the elements to be conditioned, i.e. the battery pack 12, the electric motor 13 and the passenger compartment 14, are also in fluidic communication with each other so that it is possible to take advantage of the residual heat of at least one of said elements (the electric motor 13 in this example) to help to adjust the temperature of at least another of said elements (the passenger compartment 14 in this example, although the residual heat of the electric motor 13 is not sufficient by itself to adjust the temperature of the passenger compartment 14 as desired).

If the batteries 12 need to be heated, the cooler 17 remains inactive, as in the examples shown in Figures 7D and 7E. In the operating mode represented in figure 7D, which is also a main operating mode, the batteries 12 are heated with the heater 16, following another hydraulic circuit, represented with the letter F, and if the electric motor 13 needs to be cooled, it can be cooled through the radiator 15 following the second hydraulic circuit C, as the one shown in Figure 7A. Thus, in the example of figure 7D, two hydraulic circuits F and C are managed simultaneously. Each hydraulic circuit F and C is used to independently condition a respective element, the battery pack 12 and the electric motor 13 in this case, not being necessary in this case conditioning the passenger compartment 14.

In the operating mode shown in figure 7E, which is also a main operating mode, the cooler 17 is inactive and the batteries 12 and the passenger compartment 14 are heated with the heater 16, following another hydraulic circuit, shown with the letter G, while if it is necessary to cool the electric motor 13 it can be cooled through the radiator 15 following the second hydraulic circuit C, as the one shown in Figure 7A. In this case, therefore, two of the elements to be conditioned are fluidly communicated with each other (the battery pack 12 and the passenger compartment 14) through the hydraulic circuit G, while the third element to be conditioned, the electric motor 13 in this case, is managed independently through the hydraulic circuit C.

If it was only necessary to heat the passenger compartment 14, for example, the passage of the fluid towards the connection conduit 5a could be blocked to work with one of the valves 1 or 2. Thus, in the example of Figure 7F, where one of the secondary operating modes is shown, the passenger compartment 14 is heated with the heater 16, following the third hydraulic circuit A, as the one shown in Figure 7A, no further hydraulic circuit being necessary. However, if it is also necessary to condition the electric motor 13 for example, it could be cooled through the radiator 15 via the second hydraulic circuit C, as the one shown in figures 7A or 7D. In the latter case, the valve assembly 100 or 110 would independently manage the two hydraulic circuits A and C, each valve 1 and 2 of the valve assembly 100 or 110 managing a respective hydraulic circuit, the valve assembly 100 or 110 being operated according to the secondary operation since the connection conduit 5a is blocked.

Therefore, depending on the thermal needs of each element to be conditioned of the vehicle, which will be influenced in part by the environment in which the vehicle is driven, a control unit of the vehicle, not shown in the drawings, will define the optimum operating mode of the valve assembly 100 or 110 so that the thermal management of the vehicle is the most efficient in each case. To assist in the thermal management, the vehicle may comprise multiple temperature sensors to assist in monitoring the status of each element to be conditioned, i.e., the battery pack 12, the electric motor 13 and the passenger compartment 14.

The diagrams of Figures 7A to 7F are examples of a few operating modes among the wide variety of modes of operation offered by the valve assembly 100 or 110 of the invention, which as has been demonstrated is achieved with a simple design of the valves 1 and 2, especially with the simple design of the respective valve bodies 3.

Although Figures 7A to 7F show the thermal management module 200 and the valve assembly 100 according to the first embodiment, said diagrams are also valid for any of the described embodiments of the thermal management module and the valve assembly.

## Claims

1. Valve assembly comprising a first valve (1) and a second valve (2), each valve (1, 2) comprising an inner cavity (4), a movable valve body (3) arranged inside the inner cavity (4) so that it can rotate, and a plurality of conduits (5) in fluidic communication with the corresponding inner cavity (4), so that rotating the valve body (3) at least two of the conduits (5) of the valve assembly (100; 110) are fluidically connected, **characterized in that** the valve assembly (100; 110') comprises a connecting conduit (5a) which fluidically connects the inner cavity (4) of the first valve (1) and the inner cavity (4) of the second valve (2), so that the valve bodies (3) of each valve (1, 2) can be arranged in such a way that at least one conduit (5) of the first valve (1) is fluidically connected to at least one conduit (5) of the second valve (2).

2. Valve assembly according to claim 1, wherein the valve assembly (100; 110) comprises a main body (6), said main body (6) comprising the two inner cavities (4), so that both inner cavities (4) are fluidically connected through the connecting conduit (5a), a respective valve body (3) being provided in each inner cavity (4) .

3. Valve assembly according to claim 1 or 2, wherein each valve (1, 2) also comprises a shaft (7) cooperating with the respective valve body (3), each shaft (7) being configured to couple to a respective actuator (8), so that the respective valve body (3) can rotate.

4. Valve assembly according to claim 3, wherein each valve body (3) and the respective shaft (7) form a single part, said shaft (7) protruding axially from the valve body (3).

5. Valve assembly according to any one of the preceding claims, wherein the inner cavity (4) of each valve (1, 2) is in fluidic communication with four conduits (5) and with the connecting conduit (5a), the respective valve body (3) being configured to selectively communicate at least two of said conduits (5), so that the valve assembly (100; 110) can work as two independent four-way valves or as an eight-way valve.

6. Valve assembly according to claim 5, wherein the valve body (3) of each valve (1, 2) comprises three passage channels (9), the passage channels (9) being configured to allow the passage of a fluid between two conduits (5) of a respective valve (1, 2), or between a conduit (5) of the respective valve (1, 2) and the connecting conduit (5a).

7. Valve assembly according to claim 5 or 6, wherein the valve assembly (100; 110) comprises a main operating mode wherein the valve bodies (3) of the valves (1, 2) are arranged in such a way that a first conduit (5) of the first valve (1) is fluidically connected to a first conduit (5) of the second valve (2), a second conduit (5) of the first valve (1) is fluidically connected to a third conduit (5) of the first valve (1), and a second conduit (5) of the second valve (2) is fluidically connected to a third conduit (5) of the second valve (2), so that up to three independent hydraulic circuits can be managed simultaneously.

8. Valve assembly according to any one of claims 5 to 7, wherein the valve assembly (100; 110) comprises a secondary operating mode wherein the valve bodies (3) of the valves (1, 2) are arranged in such a way that at least two conduits (5) of the first valve (1) are fluidically connected to each other, and/or at least two conduits (5) of the second valve (2) are fluidically connected to each other, so that up to two independent hydraulic circuits per valve (1, 2) can be managed simultaneously.

9. Integrated thermal management module for motor vehicles, **characterized in that** it comprises a valve assembly (100; 110) according to any of the preceding claims, a first actuator (8) configured to move the valve body (3) of the first valve (1), and a second actuator (8) configured to move the valve body (3) of the second valve (2).

10. Integrated thermal management module according to claim 9, comprising a first hydraulic pump (10) in fluidic communication with a conduit (5) connected to the inner cavity (4) of the first valve (1), and a second hydraulic pump (10) in fluidic communication with a conduit (5) connected to the inner cavity (4) of the second valve (2).

11. Integrated thermal management module according to claim 10, wherein the hydraulic pumps (10) and the respective valves (1, 2) of the valve assembly (100) are arranged one after the other in a longitudinal direction (X), each pump (10) being arranged at one end of the valve assembly (100).

12. Integrated thermal management module according to claim 10, wherein the first hydraulic pump (10) and the first valve (1) are arranged according to a first longitudinal direction (X1) on a first level, and the second hydraulic pump (10) and the second valve (2) are arranged according to a second longitudinal direction (X2) parallel to the first longitudinal direction (X1) on a second level, so that the respective valves (1, 2) are arranged according to an axial direction (Z) perpendicular to the longitudinal direction (X).

13. Electric motor vehicle comprising elements to be conditioned comprising a first element (12), preferably a battery pack, a second element (13), preferably an electric motor, and a third element (14), preferably a passenger compartment where the passengers of the vehicle are located, and the vehicle also comprising conditioning means comprising a first conditioner (15), preferably a radiator, a second conditioner (16), preferably a heater, and a third conditioner (17), preferably a cooler, and at least three hydraulic pumps (10), **characterized in that** two of the hydraulic pumps (10) are integrated in an integrated thermal management module (200; 210) according to any of claims 9 to 12, said module (200; 210) being configured to interact with any of the conditioning means (15, 16, 17) to cool and/or heat any of the elements to be conditioned (12, 13, 14).

14. Method of thermal management of the electric motor vehicle according to claim 13, wherein each conditioning element (12, 13, 14) can be conditioned by any of the conditioners (15, 16, 17) of the conditioning means and/or by another conditioning element (12, 13) via a respective hydraulic circuit which is managed by the valve assembly (100; 110) according to any of claims 1 to 8.

15. Method for thermal management of the electric motor vehicle according to claim 13, wherein each element to be conditioned (12, 13, 14) can be conditioned by a respective conditioner (15, 16, 17) of the conditioning means via a respective hydraulic circuit which is managed by the valve assembly (100; 110) according to any of claims 1 to 8.
